# EUROPEAN PATENT SPECIFICATION

(11) **EP 3 021 636 B1**
(45) Date of publication and mention of the grant of the patent: **19.02.2020**
(21) Application number: 15195918.6
(22) Date of filing: 18.08.2006
(51) Int. Cl.: H04W 76/10, H04W 72/06

(54) **MOBILE RADIO COMMUNICATIONS DEVICE AND RELATED METHOD AND SYSTEM**
MOBILFUNKKOMMUNIKATIONSVORRICHTUNG UND ZUGEHÖRIGES VERFAHREN UND SYSTEM
DISPOSITIF DE COMMUNICATION RADIO MOBILE ET PROCÉDÉ ET SYSTÈME ASSOCIÉS

(30) Priority: 18.08.2005 GB 0516985
(43) Date of publication of application: 18.05.2016
(62) Divisional of application: 14162008.8
(73) Proprietor: NEC Corporation, Minato-ku, Tokyo 108-8001 (JP)
(72) Inventor: ROBERTS, Michael, 92200 Neuilly Sur Seine (FR)
(74) Representative: Gill, David Alan

(56) References cited:
- "3rd Generation Partnership Project; Technical Specification Group RAN; Signalling enhancements for Circuit-Switched (CS) and Packet-Switched (PS) Connections; Analyses and Recommendations (Release 7)", 3GPP STANDARD; 3GPP TR 25.815, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V0.2.1, 1 May 2005 (2005-05-01), pages 1-19, XP050380968,
- NOKIA: "Setting up F-DPCH and E-DCH in RRC connection setup", 3GPP DRAFT; R2-051685, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Athens, Greece; 20050519, 19 May 2005 (2005-05-19), XP050128851,
- "Use of HSDPA and EDCH for CS signalling", 3GPP DRAFT; R2-052022 USE OF HSDPA AND EDCH FOR CS SIGNALLING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. London, UK; 20050824, 24 August 2005 (2005-08-24), XP050129157,

## Description

The present invention relates to a mobile radio communications device and related method and system employing a mobile radio communications device network.

Mobile radio communication device networks employ a variety of forms of signalling for exchanges between the mobile radio communications devices connected to the network and network elements such as the radio network controller. For current so-called third generation networks, the Third Generation Partnership Project (3GPP) has defined, by way of an on-going series of releases, a variety of standards to which network operators and equipment suppliers must conform.
Within a mobile radio communications device network, a requirement for Circuit Switch (CS) signalling often arises although the current manner of user equipment and network operation and signalling is such as to exhibit disadvantageous limitations.
For example, from the release R99 according to the 3GPP, problems arise in relation to the Dedicated Physical Channel (DPCH) employed in accordance with that release. For example, it is found that, at a transmission speed of 3.4 kbps, the DPCH can prove disadvantageously slow leading likewise to a disadvantageous delay in CS call set-up times. Yet further, CS signalling capacity limitations are also experienced.
Further, through the use of an Enhanced Uplink Dedicated Channel (EDCH) and which is found from the release Rel-6 of the 3GPP specification, further limitations can arise relating to the Radio Network Controller (RNC) processing load. In accordance with Rel-6, the RNC is required to allocate a R99 DPCH and also an EDCH in order to increase the signalling speed. Of course, in order to achieve such allocation of the R99 DPCH and the EDCH, it is necessary to disadvantageously double the Radio Resource Management (RRM) requirements.
Also, although F-DPCH was introduced in Rel-6 in an attempt to limit code resource requirements within the packet switched domain, the above-mentioned problems associated with the use of the DPCH in relation to the CS domain have not been addressed.
The above-mentioned problems lead to disadvantageous performance limitations and inefficiencies.
Disclosed in 3GPP TR 25.815 V0.2.1 (2005-05) are analyses and some recommendations for improving circuit switching and packet switching call setup and reconfiguration procedures in UMTS terrestrial radio access. Also, from the Nokia document "Setting up F-DPCH and E-DCH in RRC connection setup", 3GPP DRAFT; R2-051685, there is discussion of a change request seeking to allow a UE to indicate it's capability of supporting HSDPA and E-DCH whilst the UE is attempting to establish signalling connection to a PS domain. The present invention seeks to provide for a mobile radio communications device and related method and system of operation, and related network devices, having advantages over known such devices, methods and systems.

The invention is defined in the appended set of claims. According to an exemplary aspect, there is provided a mobile radio communications device arranged to support at least one of a High Speed Downlink Packet Access channel and an Enhanced Uplink Dedicated channel, the mobile radio communications device including: means for signalling, to a network controller, support of the at least one of the High Speed Downlink Packet Access channel and the Enhanced Uplink Dedicated Uplink channel supported by the mobile radio communications device; means for determining that a circuit switched connection is required, wherein the mobile radio communications device is arranged to signal the said support of the at least one of the High Speed Downlink Packet Access channel and the Enhanced Uplink Dedicated channel when said determining means has determined that said circuit switched connection is required; and means for receiving from the network controller of a mobile radio communications device information relating to an allocation, by the network controller, of at least one High Speed Downlink Packet Access channel or Enhanced Uplink Dedicated channel supported by the mobile radio communications device, for circuit switched signalling exchanges.
Preferably, the said means for determining that a circuit switched connection is required includes means for signalling from the mobile radio communications device that such a circuit switched connection is required.

According to another exemplary aspect, there is provided a network controller device for a mobile radio communications network, the network controller device including: means for allocating, responsive to receipt of signalling from a mobile radio communications device indicating support for at least one of a High Speed Downlink Packet Access channel and an Enhanced Uplink Dedicated channel, a respective High Speed Downlink Packet Access channel or Enhanced Uplink Dedicated channel to the mobile radio communications device for the exchange of circuit switched signalling.
Advantageously, the network controller device can be arranged to subsequently allocate a circuit switched bearer for circuit switched signalling exchanges with a mobile radio communications device.
In particular, the network controller as arranged to allocate a conventional dedicated channel for subsequent handling of the ongoing circuit switched signalling exchange.

Yet further the radio network controller can be arranged to modify measurement requirements within a cell so as to employ a cell configuration having regard to the particular circuit switched signals.

According to yet a further aspect, there is provided a method, performed by a mobile radio communications device arranged to support at least one of a High Speed Downlink Packet Access channel and an Enhanced Uplink Dedicated channel, of providing circuit switched signalling between the mobile radio communications device and a network controller within a mobile radio communications network, the method including: determining that a circuit switched connection is required; signalling to the network controller, when it has been determined that the circuit switched connection is required, support of the at least one of the High Speed Downlink Packet Access channel and the Enhanced Uplink Dedicated Uplink channel supported by the mobile radio communications device; receiving, from the network controller of the mobile radio communications device, information relating to an allocation, by the network controller, of at least one High Speed Downlink Packet Access channel or Enhanced Uplink Dedicated channel supported by the mobile radio communications device, for circuit switched signalling exchanges; and employing one of the High Speed Downlink Packet Access channel and the Enhanced Uplink Dedicated channel for providing the circuit switched signalling accordingly.
In particular either one of the said channels can be employed at least for the initial stages of the circuit switched signalling.
In this manner, subsequent to an initial phase of the circuit switched signalling the method can include the step of using a conventional circuit switched connection for the ongoing circuit switched signalling exchanges.
The method can also include the step of the mobile radio communications device signalling its support of at least one of the said channels to a network controller within the network and, can subsequently comprise a step of at the network controller within the network responding to the said signalling of the support for the channels by allocating at least one of the said channels for the circuit switched signalling.
Yet further, the method can include the step of modifying, at a radio network controller, measurement requirements for a cell in order to configure the cell for the circuit switched signalling required.

According to a still further aspect, there is provided a mobile radio communications system comprising at least one of a mobile radio communications device as defined above, and a network controller device as defined above.

According to another further aspect, there is provided a method performed by a network controller device of a mobile radio communications network, the method including: allocating, responsive to receipt of signalling from a mobile radio communications device indicating support for at least one of a High Speed Downlink Packet Access channel and an Enhanced Uplink Dedicated channel, a respective High Speed Downlink Packet Access channel or Enhanced Uplink Dedicated channel to the mobile radio communications device for exchange of circuit switched signalling.
As will be appreciated from the further discussion below, the present invention is advantageous since, in allowing for a selection of High Speed Downlink Packet Access and/or Enhanced Uplink Dedicated Channel bearers for initial circuit switched signalling exchanges, the above-mentioned speed limitations and inefficiencies can advantageously be reduced.
To enhance the manner in which the present invention provides an improvement to the prior art discussed above, it is advantageous that the mobile radio communications device indicate as early as possible its support for the High Speed Downlink Packet Access channel and/or the Enhanced Uplink Dedicated Channel so that the radio network controller can then allocate such channels for circuit switch signalling in a timely fashion.

The present invention is advantageously arranged to take advantage of signalling-support characteristics of a High Speed Downlink Packet Access channel or an Enhanced Uplink Dedicated Channel and arranged for use in relation to circuit switched signalling.

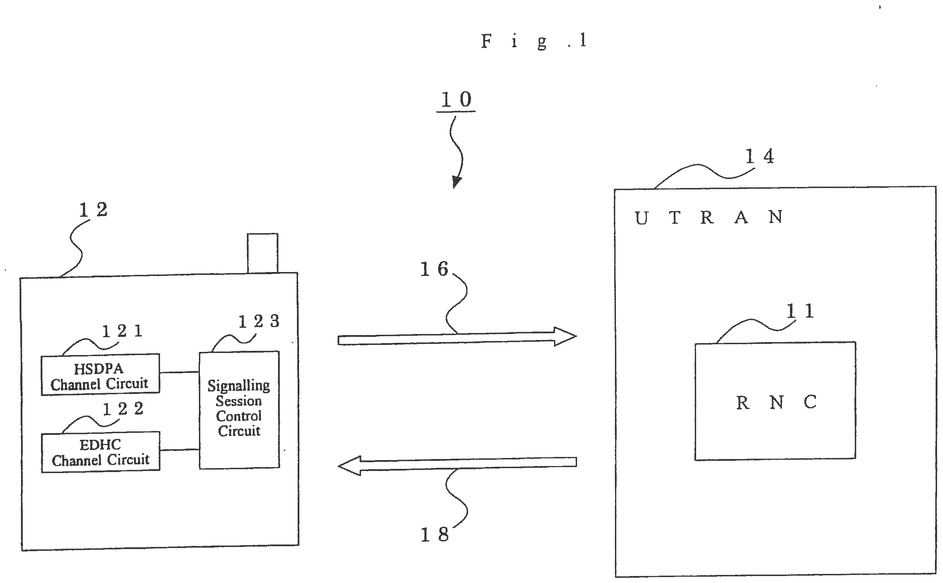

The invention is described further hereinafter with reference to the accompanying drawing in which illustrates a radio communications device system, and related operational elements, according to an embodiment of the present invention.

Within Fig.l, there is illustrated a mobile radio communications system 10 as part of a mobile radio communications network and employing user equipment 12 in the form of a mobile radio communications device handset a UMTS Terrestrial Radio Access Network (UTRAN) 14 and, signalling 16, 18 arising in accordance with an embodiment of the present invention for establishment of signal switched signalling.
Initially, when the user handset 12 is required to send a connection management service request for establishing circuit switched signalling, which of course may arise either through responding to paging signals received at the handset 12 or, through the handset 12 seeking to initiate the communication session. The handset 12 is arranged to indicate its support for HSDPA and/or EDCH channels. It includes HSDPA channel circuit 121 and EDCH channel circuit 122. Such signalling is indicated by arrow 16 and is delivered to a RNC 11 of the UTRAN 14. The handset 12 is further arranged to provide an indication that a circuit switched signalling session control circuit 123 is also required.
The signaling session control circuit 123 carries the signalling to the RNC to support of at least one of the those channel and determines a circuit switched connection between the HSDPA channel circuit 121 or EDCH channel circuit 122 which is required.
Upon receipt of the signal 16 from the signalling session control circuit 123 of the handset 12, the RNC 11 within the UTRAN 14 is arranged to employ such information immediately to select HSDPA and/or EDCH bearers which are then allocated to the handset 12 for support of the required circuit switched signalling exchanges.

The initial stages of the circuit switched signalling from the signaling session control circuit 123 of the handset 12 to the network therefore occur on one of the HSDPA and EDCH channel circuits 121 and 122, and so the speed-limitations and inefficiencies arising within the prior-art are therefore advantageously reduced.
During subsequent operation of the initial stages of the circuit switched signalling exchanges, and once the conventional circuit switched bearer is located for allocation to the signalling exchange, the RNC 11 can be arranged to allocate such a conventional Dedicated Control Channel (DCCH) and other related Dedicated Channels (DCH) and upon which the ongoing circuit switched signalling exchanges can continue.
Through the support of HSDPA and EDCH channels at the handset 12, it will be appreciated that advantageously relatively high speeds, for example 2Mbps for HSDPA cat.5 channels, and EDCH channels, are available. As a further aspect of the illustrated embodiment, the RNC 11 within the UTRAN 40 can be arranged to modify the measurement requirements to adapt cell configuration having regard to the particular circuit switched services required.
Thus, as can be appreciated the concept of the present invention, by employing HSDPA and EDCH bearers to carry CS signalling between a mobile radio communications device and a related network, can lead to advantages in the manner in which at least initial stages of CS signalling from a handset are handled.

## Claims

1. User equipment, UE, (12) comprising:
means for determining if the UE is attempting to establish circuit switched, CS, signalling;
means for generating a connection request wherein:
when said UE supports a High Speed Downlink Packet Access channel and an Enhanced Uplink Dedicated Channel, said connection request includes information which identifies support for the High Speed Downlink Packet Access channel and the Enhanced Uplink Dedicated Channel; and
when said UE is attempting to establish CS signalling, said connection request further includes a circuit switched signalling indication with said information identifying support for the High Speed Downlink Packet Access channel and the Enhanced Uplink Dedicated Channel; and
means for sending the connection request to a network controller (11).

2. A method in a user equipment, UE, (12) comprising:
determining if the UE is attempting to establish circuit switched signalling;
generating a connection request wherein:
when said UE supports a High Speed Downlink Packet Access channel and an Enhanced Uplink Dedicated Channel, said connection request includes information which identifies support for the High Speed Downlink Packet Access channel and the Enhanced Uplink Dedicated Channel; and
when said UE is attempting to establish CS signalling, said connection request further includes a circuit switched signalling indication with said information identifying support for the High Speed Downlink Packet Access channel and the Enhanced Uplink Dedicated Channel; and
sending the connection request to a network controller (11).

3. A network controller (11) comprising:
means for receiving, from a user equipment, UE, a connection request wherein:
when said UE supports a High Speed Downlink Packet Access channel and an Enhanced Uplink Dedicated Channel, said connection request includes information which identifies support for the High Speed Downlink Packet Access channel and the Enhanced Uplink Dedicated Channel; and
when said UE is attempting to establish CS signalling, said connection request further includes a circuit switched signalling indication with the information identifying support for the High Speed Downlink Packet Access channel and the Enhanced Uplink Dedicated Channel; and
means for establishing, when said connection request includes said information which identifies support for the High Speed Downlink Packet Access channel and the Enhanced Uplink Dedicated Channel and said circuit switched signalling indication, a corresponding CS signalling connection for said UE.

4. A method in a network controller (11) comprising:
receiving, from a user equipment, UE, a connection request wherein:
when said UE supports a High Speed Downlink Packet Access channel and an Enhanced Uplink Dedicated Channel, said connection request includes information which identifies support for the High Speed Downlink Packet Access channel and the Enhanced Uplink Dedicated Channel; and
when said UE is attempting to establish CS signalling, said connection request further includes a circuit switched signalling indication with said information identifying support for the High Speed Downlink Packet Access channel and the Enhanced Uplink Dedicated Channel; and
establishing, when said connection request includes said information which identifies support for the High Speed Downlink Packet Access channel and the Enhanced Uplink Dedicated Channel and said circuit switched signalling indication, a corresponding CS signalling connection for said UE.

## Patentansprüche

1. Benutzergerät UE (12), das Folgendes umfasst:
Mittel zum Feststellen, ob das UE versucht, leitungsgeschaltete (CS) Signalisierung aufzubauen;
Mittel zum Erzeugen einer Verbindungsanforderung, wobei:
wenn das genannte UE einen HSDPA-(High Speed Downlink Packet Access)-Kanal und einen EUD-(Enhanced Uplink Dedicated)-Kanal unterstützt, die genannte Verbindungsanforderung Informationen beinhaltet, die Unterstützung für den HSDPA-Kanal und den EUD-Kanal identifizieren; und
wenn das genannte UE versucht, CS-Signalisierung aufzubauen, die genannte Verbindungsanforderung ferner eine Anzeige für leitungsgeschaltete Signalisierung beinhaltet, wobei die genannten Informationen Unterstützung für den HSDPA-Kanal und den EUD-Kanal identifizieren; und
Mittel zum Senden der Verbindungsanforderung zu einer Netzwerksteuerung (11).

2. Verfahren in einem Benutzergerät UE (12), das Folgendes beinhaltet:
Feststellen, ob das UE versucht, leitungsgeschaltete Signalisierung aufzubauen;
Erzeugen einer Verbindungsanforderung, wobei:
wenn das genannte UE einen HSDPA-Kanal und einen EUD-Kanal unterstützt, die genannte Verbindungsanforderung Informationen beinhaltet, die Unterstützung für den HSDPA-Kanal und den EUD-Kanal identifizieren; und
wenn das genannte UE versucht, CS-Signalisierung aufzubauen, die genannte Verbindungsanforderung ferner eine Anzeige für leitungsgeschaltete Signalisierung beinhaltet, wobei die genannten Informationen Unterstützung für den HSDPA-Kanal und den EUD-Kanal identifizieren; und
Senden der Verbindungsanforderung zu einer Netzwerksteuerung (11).

3. Netzwerksteuerung (11), die Folgendes umfasst:
Mittel zum Empfangen, von einem Benutzergerät UE, einer Verbindungsanforderung, wobei:
wenn das genannte UE einen HSDPA-Kanal und einen EUD-Kanal unterstützt, die genannte Verbindungsanforderung Informationen beinhaltet, die Unterstützung für den HSDPA-Kanal und den EUD-Kanal identifizieren; und
wenn das genannte UE versucht, CS-Signalisierung aufzubauen, die genannte Verbindungsanforderung ferner eine Anzeige für leitungsgeschaltete Signalisierung beinhaltet, wobei die Informationen Unterstützung für den HSDPA-Kanal und den EUD-Kanal identifizieren; und
Mittel zum Aufbauen, wenn die genannte Verbindungsanforderung die genannten Informationen beinhaltet, die Unterstützung für den HSDPA-Kanal und den EUD-Kanal und die Anzeige für leitungsgeschaltete Signalisierung identifizieren, einer entsprechenden CS-Signalisierungsverbindung für das genannte UE.

4. Verfahren in einer Netzwerksteuerung (11), das Folgendes beinhaltet:
Empfangen einer Verbindungsanforderung von einem Benutzergerät UE, wobei:
wenn das genannte UE einen HSDPA-Kanal und einen EUD-Kanal unterstützt, die genannte Verbindungsanforderung Informationen beinhaltet, die Unterstützung für den HSDPA-Kanal und den EUD-Kanal identifizieren; und
wenn das genannte UE versucht, CS-Signalisierung aufzubauen, die genannte Verbindungsanforderung ferner eine Anzeige für leitungsgeschaltete Signalisierung beinhaltet, wobei die genannten Informationen Unterstützung für den HSDPA-Kanal und den EUD-Kanal identifizieren; und
Aufbauen, wenn die genannte Verbindungsanforderung die genannten Informationen beinhaltet, die Unterstützung für den HSDPA-Kanal und den EUD-Kanal und die genannte leitungsgeschaltete Signalisierungsanzeige identifizieren, einer entsprechenden CS-Signalisierungsverbindung für das genannte UE.

## Revendications

1. Équipement d'utilisateur, UE, (12) comprenant :
un moyen de détermination du fait que l'UE tente d'établir une signalisation à commutation de circuits, CS ;
un moyen de génération d'une demande de connexion dans lequel :
lorsque ledit UE supporte un canal d'accès par paquets de liaison descendante à haute vitesse et un canal dédié amélioré de liaison montante, ladite demande de connexion inclut des informations qui identifient un support du canal d'accès par paquets de liaison descendante à haute vitesse et du canal dédié amélioré de liaison montante ; et
lorsque ledit UE tente d'établir une signalisation CS, ladite demande de connexion inclut en outre une indication de signalisation à commutation de circuits avec lesdites informations identifiant un support du canal d'accès par paquets de liaison descendante haute vitesse et du canal dédié amélioré de liaison montante ; et
un moyen d'envoi de la demande de connexion à un dispositif de commande de réseau (11).

2. Procédé dans un équipement d'utilisateur, UE, (12) comprenant :
une détermination du fait que l'UE tente d'établir une signalisation à commutation de circuits ;
une génération d'une demande de connexion dans lequel :
lorsque ledit UE supporte un canal d'accès par paquets de liaison descendante à haute vitesse et un canal dédié amélioré de liaison montante, ladite demande de connexion inclut des informations qui identifient un support du canal d'accès par paquets de liaison descendante à haute vitesse et du canal dédié amélioré de liaison montante ; et
lorsque ledit UE tente d'établir une signalisation CS, ladite demande de connexion inclut en outre une indication de signalisation à commutation de circuits avec lesdites informations identifiant un support du canal d'accès par paquets de liaison descendante haute vitesse et du canal dédié amélioré de liaison montante ; et
un envoi de la demande de connexion au dispositif de commande de réseau (11).

3. Dispositif de commande de réseau (11) comprenant :
un moyen de réception, à partir d'un équipement d'utilisateur, UE, d'une demande de connexion dans lequel :
lorsque ledit UE supporte un canal d'accès par paquets de liaison descendante à haute vitesse et un canal dédié amélioré de liaison montante, ladite demande de connexion inclut des informations qui identifient un support du canal d'accès par paquets de liaison descendante à haute vitesse et du canal dédié amélioré de liaison montante ; et
lorsque ledit UE tente d'établir une signalisation CS, ladite demande de connexion inclut en outre une indication de signalisation à commutation de circuits avec lesdites informations identifiant un support du canal d'accès par paquets de liaison descendante haute vitesse et du canal dédié amélioré de liaison montante ; et
un moyen d'établissement, lorsque ladite demande de connexion inclut lesdites informations qui identifient un support du canal d'accès par paquets de liaison descendante à haute vitesse et du canal dédié amélioré de liaison montante et ladite indication de signalisation à commutation de circuits, d'une connexion de signalisation CS correspondante pour ledit UE.

4. Procédé dans un dispositif de commande de réseau (11) comprenant :
une réception, à partir d'un équipement d'utilisateur, UE, d'une demande de connexion dans lequel :
lorsque ledit UE supporte un canal d'accès par paquets de liaison descendante à haute vitesse et un canal dédié amélioré de liaison montante, ladite demande de connexion inclut des informations qui identifient un support du canal d'accès par paquets de liaison descendante à haute vitesse et du canal dédié amélioré de liaison montante ; et
lorsque ledit UE tente d'établir une signalisation CS, ladite demande de connexion inclut en outre une indication de signalisation à commutation de circuits avec lesdites informations identifiant un support du canal d'accès par paquets de liaison descendante haute vitesse et du canal dédié amélioré de liaison montante ; et
un établissement, lorsque ladite demande de connexion inclut lesdites informations qui identifient un support du canal d'accès par paquets de liaison descendante à haute vitesse et du canal dédié amélioré de liaison montante et ladite indication de signalisation à commutation de circuits, d'une connexion de signalisation CS correspondante pour ledit UE.
